# EUROPEAN PATENT APPLICATION

(11) **EP 3 112 192 A1**
(43) Date of publication of application: **04.01.2017**
(21) Application number: 16174615.1
(22) Date of filing: 15.06.2016
(51) Int. Cl.: B60C 23/12

(54) **TIRE**

(30) Priority: 29.06.2015 US 201514753113
(71) Applicant: The Goodyear Tire & Rubber Company, Akron, Ohio 44316 (US)
(72) Inventor: GOBINATH, Thulasiram, Hudson, OH 44236 (US); BENEDICT, Robert Leon, Kent, OH 44240 (US); GOPALA, Arun Kumar Byatarayanapura, Copley, OH 44321 (US)
(74) Representative: Kutsch, Bernd

(57) **Abstract**

A tire having a sidewall groove (42) adapted to deform between a non-deformed state and a deformed constricted state in response to a bending of a sidewall bending region of a first sidewall (12) within a rolling tire footprint, wherein a first groove axis (10) extends along the cross section of the sidewall groove (42) through the center of it and perpendicular to the outer side (11) of the first sidewall (12) and a second axis extends through the center of the sidewall groove (42) and perpendicular to the first groove axis (10), a groove width along the second axis and between respective groove sidewalls is between 1.5 mm and 4.0 mm and a groove angle (α) is between 28° and 33° as measured between the first groove axis (10) and a plane (13) parallel to a road surface on which the tire is positioned with its tread.

## Description

### Field of the Invention

The present invention relates generally to tires, particularly to air maintenance tires, and, more specifically, to an air maintenance and tire pumping assembly.

### Background of the Invention

Normal air diffusion reduces tire pressure over time. The natural state of tires is under inflated. Accordingly, drivers must repeatedly act to maintain tire pressures or they will see reduced fuel economy, tire life and reduced vehicle braking and handling performance. Tire Pressure Monitoring Systems have been proposed to warn drivers when tire pressure is significantly low. Such systems, however, remain dependant upon the driver taking remedial action when warned to re-inflate a tire to recommended pressure. It is a desirable, therefore, to incorporate an air maintenance feature within a tire that will maintain air pressure within the tire in order to compensate for any reduction in tire pressure over time without the need for driver intervention.

### Summary of the Invention

The invention relates to a tire in accordance with claim 1.

Dependent claims refer to preferred embodiments of the invention.

The tire has a tire cavity and first and second sidewalls extending respectively from first and second tire bead regions to a tire tread region, the first sidewall having at least one bending region operatively bending within a rolling tire footprint and a sidewall groove defined by groove sidewalls positioned within the bending region of the first sidewall, the sidewall groove deforming segment by segment between a non-deformed state and a deformed constricted state in response to a bending of the first sidewall bending region within the rolling tire footprint. The tire has a first groove axis extending along the cross section of the sidewall groove through the center of the sidewall groove and perpendicular to the inner side of the first sidewall facing the tire cavity at the location of the sidewall groove, and a second axis extending through the center of the sidewall groove and perpendicular to the first groove axis. The sidewall groove, at an unloaded and fully pressurized condition of the tire, has a groove width along the second axis and between respective groove sidewalls in a range of from 1.5 mm to 4.0 mm, and the sidewall groove has or makes a groove angle α in a range of from 28° to 33° as measured between the first axis and a plane parallel to a road surface on which the tire is positioned with its tread.

In a preferred aspect of the invention, a tire or tire assembly in accordance with the present invention includes a tire having a tire cavity and first and second sidewalls extending respectively from first and second tire bead regions to a tire tread region. The first sidewall has at least one bending region operatively bending within a rolling tire footprint and a sidewall groove defined by groove sidewalls positioned within the bending region of the first tire sidewall. The groove deforms segment by segment between a non-deformed state and a deformed constricted state in response to the bending of the first sidewall bending region within the rolling tire footprint. The sidewall groove, at an unloaded and fully pressurized condition, has a groove width of 1.7 mm to 2.3 mm and a groove angle of 30° to 31° relative to a road surface of the tire.

According to another aspect of the present invention, an air tube is positioned within the sidewall groove in contacting engagement with the groove sidewalls, the air tube having an axial air passageway resiliently transfiguring segment by segment between an expanded sectional configuration and an at least a partially collapsed sectional configuration responsive to respective segment by segment engagement by the groove sidewalls against the air tube within the rolling tire footprint. According to still another preferred aspect of the present invention, a projecting ridge comprises an annular rib integrally formed with the sidewall and extending a circumference of the sidewall groove rim.

According to yet another preferred aspect of the present invention, a plurality of projecting ridges spaced apart along an air tube passageway at a predetermined spacing frequency.

According to still another preferred aspect of the present invention, the spacing frequency of the plurality of projecting ridges increases in a direction of air flow within the air passageway.

According to yet another preferred aspect of the present invention, the spacing between adjacent projecting ridges decreases in a direction of air flow within the air passageway.

According to still another preferred aspect of the present invention, each of the plurality of ridges has a respective projecting amplitude into the air passageway.

According to yet another preferred aspect of the present invention, the respective projecting amplitudes of at least two of the plurality of ridges are mutually differentiated.

According to still another preferred aspect of the present invention, the plurality of ridges increase in respective projecting amplitude in the direction of air flow within the air tube.

According to yet another preferred aspect of the present invention, the spacing frequency of the projecting ridges increases in a direction of air flow within the air passageway.

According to still another preferred aspect of the present invention, the spacing between adjacent projecting ridges decreases in a direction of air flow within the air passageway.

According to yet another preferred aspect of the present invention, an outlet device is positioned along the air tube for directing air from the air tube toward the tire cavity and the direction of air flow in an operative cycle is toward the outlet device.

According to still another preferred aspect of the present invention, the air tube comprises an annular body extending substantially a circumference of the tire first sidewall and the sidewall groove is annular and located within a lower region of the first tire sidewall.

According to yet another preferred aspect of the present invention, substantially an entirety of the air tube resides within the sidewall groove.

### Definitions

"Axial" and "axially" means lines or directions that are parallel to the axis of rotation of the tire.

"Circumferential" means lines or directions extending along the perimeter of the surface of the annular tread perpendicular to the axial direction.

"Equatorial Centerplane (CP)" (or midcircumferential plane) means the plane perpendicular to the tire's axis of rotation and passing through the center of the tread.

"Footprint" means the contact patch or area of contact of the tire tread with a flat surface at zero speed and under normal load and pressure.

"Groove" means an elongated void area in a tire dimensioned and configured in section for receipt of an air tube therein.

"Peristaltic" means operating by means of wave-like contractions that propel contained matter, such as air, along tubular pathways.

"Radial" and "radially" means directions radially toward or away from the axis of rotation of the tire.

### Brief Description of the Drawings

The invention will be described by way of example and with reference to the accompanying drawings in which:
Fig 1 is a schematic sectional view of part of a tire in accordance with the present invention; and
Fig 2 is the part of Fig. 1 further showing an air tube and a cover strip.

### Detailed Description of Example Embodiments of the Present Invention

A description of an example tire assembly for use with the present invention may be found in US-B-8,381,784, herein incorporated by reference in its entirety. An example tire assembly includes a tire, a peristaltic pump assembly, and may be mounted on a tire rim. The tire mounts in conventional fashion to a pair of rim mounting surfaces adjacent outer rim flanges. The rim flanges each have a radially outward facing flange end. A rim body supports the tire assembly. The tire is of conventional construction, having a pair of sidewalls extending from opposite bead areas to a crown or tire bead region. The tire and rim enclose a tire cavity.

The peristaltic pump assembly includes an annular air tube that encloses an annular passageway. The tube is formed of a resilient, flexible material such as plastic or rubber compounds that are capable of withstanding repeated deformation cycles wherein the tube is deformed into a flattened condition subject to external force and, upon removal of such force, returns to an original condition generally circular in cross-section. The tube is of a diameter sufficient to operatively pass a volume of air sufficient for the purposes described herein and allowing a positioning of the tube in an operable location within the tire assembly as will be described. The tube is of elongate, generally elliptical shape in section, having opposite tube sidewalls extending from a flat trailing tube end to a radiuses leading tube end. The tube is configured having a longitudinal outwardly projecting pair of locking detent ribs of generally semi-circular cross-section and each rib extending along outward surfaces of the sidewalls, respectively. The tube has a length L1 within a preferred range of 3.65 to 3.8 mm; a preferred width of D1 within a range of 2.2 to 3.8 mm; a trailing end preferred width of D3 within a range of 0.8 to 1.0 mm. The protruding detent ribs each have a radius of curvature R2 within a preferred range of 0.2 to 0.5 mm and each rib is located at a position distance L3 within a preferred range of 1.8 to 2.0 mm of the trailing tube end. The leading end of the tube has a radius R1 within a range of 1.1 to 1.9 mm. The air passageway within the tube is likewise of generally elliptical cross-section having a length L2 within a preferred range of 2.2 to 2.3 mm; and a preferred width D2 within a range of 0.5 to 0.9 mm.

The tube is profiled and geometrically configured for insertion into a groove. The groove is of elongate, generally elliptical configuration having a length L1 within a preferred range of 3.65 to 3.8 mm in complement to the elliptical shape of the tube. The groove includes a restricted narrower entryway having a nominal cross-sectional width D3 within a preferred range of 0.8 to 1.0 mm. A pair of groove rib-receiving axial detent channels of semi-circular configuration are formed within opposite sides of the groove for complementary respective receipt of the tube locking ribs. The channels are spaced approximately a distance L3 within a range of 1.8 to 2.0 mm of the groove entryway. Detent channels each have a radius of curvature R2 within a preferred range of 0.2 to 0.5 mm. An inward detent groove portion is formed having a radius of curvature R1 within a preferred range of 1.1 to 1.9 mm and a cross-sectional nominal width D1 within a preferred range of 2.2 to 3.8 mm.

The tire further provides one or more compression ribs extending the circumference of, and projecting into, the groove. The ribs form a pattern of ribs of prescribed pitch, frequency, and location as will be explained. The ribs D0 - D6, as will be explained, are formed in a preferred sequence and pitch pattern in order to render the pumping of air through the tube passageway more efficient. The ribs each have a unique and predetermined height and placement within the pattern and project outward into the groove at a radius R3 within a preferred range of 0.95 to 1.6 mm.

The peristaltic pump assembly further includes an inlet device and an outlet device spaced apart approximately 180 degrees at respective locations along the circumferential air tube. The outlet device has a T-shaped configuration in which conduits direct air to and from the tire cavity. An outlet device housing contains conduit arms that integrally extend from respective conduits. Each of the conduit arms have external coupling ribs for retaining the conduits within disconnected ends of the air tube in the assembled condition. The housing is formed having an external geometry that complements the groove and includes a flat end, a radius generally oblong body, and outwardly projecting longitudinal detent ribs. So configured, the housing is capable of close receipt into the groove at its intended location with the ribs registering within the groove.

The inlet device includes an elongate outward sleeve body joining to an elongate inward sleeve body at a narrow sleeve neck. The outward sleeve body is generally triangular in section. The inward sleeve body has an external geometry of oblong section complementary to the groove and includes a pair of detent ribs extending longitudinally along the body. An elongate air entry tube is positioned within the inward sleeve body and includes opposite tube ends and a pattern of entry apertures extending into a central tube passageway. External ribs secure the tube ends into the air tube opposite the outlet device.

The pump assembly comprises the air tube and inlet and outlet devices affixed in-line to the air tube at respective locations 180 degrees apart and inserted into the groove. The groove is located at a lower sidewall region of the tire that, when the tire is mounted to the rim, positions the air tube above the rim flange ends. The air tube may be diametrically squeezed and collapsed to accommodate insertion into the groove. Upon full insertion, the ribs register within the groove channels and the flat outer end of the tube is generally coplanar with the outer surface of the sidewall of the tire. Once fully inserted, the air passageway of the tube elastically restores into an open condition to allow the flow of air along the tube during operation of the pump.

The inlet device and the outlet device are positioned within the circumference of the circular air tube generally 180 degrees apart. The tire with the tube positioned within groove rotates in a direction of rotation, causing a footprint to be formed against the ground surface. A compressive force is directed into the tire from the footprint and acts to flatten a segment of the air tube passageway opposite the footprint. Flattening of the segment of the passageway forces air from the segment along tube passageway toward the outlet device.

As the tire continues to rotate, will be sequentially flattened or squeezed opposite the tire footprint, segment by segment, in a direction opposite to the direction of tire rotation. A sequential flattening of the tube passageway, segment by segment, causes evacuated air from the flattened segments to be pumped within tube passageway to the outlet device. Air will flow through the outlet device and into the tire cavity. Air exiting the outlet device is routed to the tire cavity and serves to re-inflate the tire to a desired pressure level. A valve system may regulate the flow of air to the cavity when the air pressure within the cavity falls to a prescribed level.

With the tire rotating, flattened tube segments are sequentially refilled by air flowing into the inlet device. The inflow of air into the inlet device and then into the tube passageway continues until the outlet device passes the tire footprint. The tube continues to be sequentially flattened segment by segment opposite the tire footprint by compressive force. Air is pumped to the inlet device where it is evacuated or exhausted outside of the tire. Passage of exhaust air from the inlet device is through the filter sleeve which is formed of a cellular or porous material or composite. Flow of air through the sleeve and into the tube is thus cleansed of debris and/or particulates. In exhaust or reverse flow, the sleeve is cleansed of trapped accumulated debris or particles within the porous medium. With the evacuation of pumped air out of the inlet device, the outlet device is in the closed position and air does not flow into the tire cavity. When the tire rotates further until the inlet device passes the tire footprint, the airflow resumes to the outlet device and causes the pumped air to flow out and into the tire cavity. Air pressure within the tire cavity is thus maintained at a desired level.

The tube is flattened segment by segment as the tire rotates. A flattened segment moves as it is rotated from the footprint while an adjacent segment moves adjacent the tire footprint and is flattened. Accordingly, the progression of squeezed or flattened tube segments can be seen to move air toward the outlet device or the inlet device depending on the rotational position of the tire relative to such devices. As each segment is moved by tire rotation away from the footprint, the compression forces within the tire from the footprint region are eliminated and the segment is free to resiliently reconfigure into an unflattened state as it refills with air from the passageway. In the original non-flattened configuration, segments of the tube resume an oblong generally elliptical shape in section.

The above-described cycle is then repeated for each tire revolution, half of each rotation resulting in pumped air going to the tire cavity and half of the rotation the pumped air is directed back out the inlet device filter sleeve to self-clean the filter. It will be appreciated that while the direction of rotation of the tire may be in either direction, the peristaltic pump assembly will function in like manner. The peristaltic pump is accordingly bi-directional and equally functional with the tire assembly moving in a forward or a reverse direction of rotation.

In a preferred location for the air tube assembly, the tube is located within the groove in a lower region of the sidewall of the tire. So located, the passageway of the tube is closed by compression strain bending the sidewall groove within a rolling tire footprint as explained above. The location of the tube in the sidewall affords the user freedom of placement and avoids contact between the tube and the rim. The higher placement of the tube in the sidewall groove uses the high deformation characteristics of this region of the sidewall as it passes through the tire footprint to close the tube.

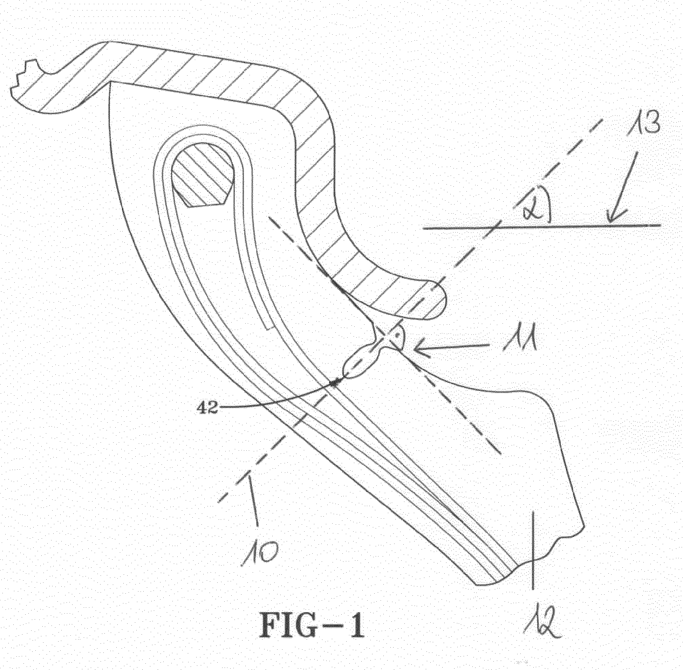

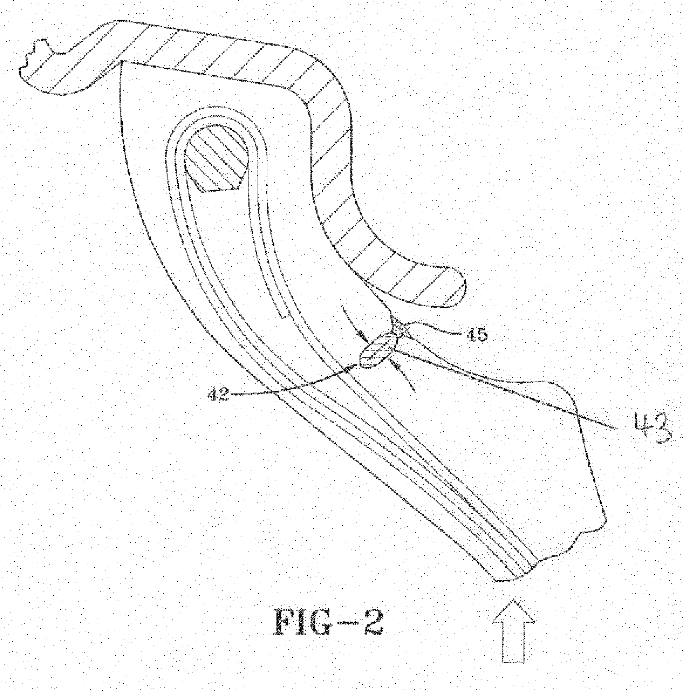

In accordance with the present invention and as shown in Figs. 1 and 2, a part of a pneumatic tire is shown having a tire cavity and first and second sidewalls extending respectively from first and second tire bead regions to a tire tread region. The first sidewall 12 has at least one bending region operatively bending within a rolling tire footprint and a sidewall groove 42 is defined by groove sidewalls positioned within the bending region of the first sidewall 12. Preferably, the tire is a self-inflating tire as further disclosed in US-B-8,381,784. The sidewall groove 42 deforms segment by segment between a non-deformed state and a deformed constricted state in response to a bending of the first sidewall bending region within the rolling tire footprint. The tire has a first groove axis 10 extending along the cross section of the sidewall groove 42 through the center of the sidewall groove 42 and perpendicular to the inner side 11 of the first sidewall 12 facing the tire cavity at the location of the sidewall groove 42, and a second axis extending through the center of the sidewall groove 42 and perpendicular to the first groove axis 10. The sidewall groove 42, at an unloaded and fully pressurized condition of the tire, has a groove width along the second axis and between respective groove sidewalls in a range of from 1.5 mm to 4.0 mm. The sidewall groove 42 also has or makes a groove angle α in a range of from 28° to 33° as measured between the first axis 10 and a plane 13 parallel to a road surface on which the tire is positioned with its tread. This design of the sidewall groove 42 has shown to provide a good pumping performance.

An even better pumping performance was achieved with a groove width along the second axis and between respective groove sidewalls in a range of from 1.7 mm to 2.2 mm and a groove angle α in a range of from 30° to 31.

As shown in Fig. 2, a tube 43 basically having the same or a similar external shape than the sidewall groove 42 may be positioned within the sidewall groove 42. A cover strip 45 may be provided separating and/or sealing the sidewall groove 42 or the sidewall groove 42 and the air tube 43 located in the sidewall groove 42 against the tire cavity. This helps to protect and secure the air tube 43 within the sidewall groove 42.

A further improved pumping performance was obtained by the groove 42 when curing pressure on the cover strip 45 is about 170000 Pa (about 2.5 psi) or in a range of from 150000 Pa to 190000 Pa.

Further, at an unloaded and fully pressurized 20" to 22.5" tire (Fig. 1), a groove width of 1.7 mm to 2.3 mm such as 2.0 mm and a groove angle α of 30.65° provided a particularly good performance.

## Claims

1. A tire having a tire cavity and first and second sidewalls extending respectively from first and second tire bead regions to a tire tread region, the first sidewall (12) having at least one bending region operatively bending within a rolling tire footprint and a sidewall groove (42) defined by groove sidewalls positioned within the bending region of the first sidewall (12), the sidewall groove (42) deforming segment by segment between a non-deformed state and a deformed constricted state in response to a bending of the first sidewall bending region within the rolling tire footprint, the tire having, at an unloaded and fully pressurized condition of the tire, a first groove axis (10) extending along the cross section of the sidewall groove (42) through the center of the sidewall groove (42) and perpendicular to the inner side (11) of the first sidewall (12) facing the tire cavity at the location of the sidewall groove (42), and a second axis extending through the center of the sidewall groove (42) and perpendicular to the first groove axis (10), wherein the sidewall groove (42), has a groove width along the second axis and between respective groove sidewalls in a range of from 1.5 mm to 4.0 mm, and wherein the sidewall groove (42) has a groove angle (α) in a range of from 28° to 33° as measured between the first axis (10) and a plane (13) parallel to a road surface on which the tire is positioned with its tread.

2. The tire of claim 1 wherein the groove angle (α) is in a range of from 29° to 32°.

3. The tire of claim 1 wherein the groove angle (α) is in a range of from 30° to 31°.

4. The tire in accordance with at least one of the previous claims wherein the sidewall groove (42) has an oval or elliptical shape.

5. The tire in accordance with at least one of the previous claims wherein the sidewall groove (42) has an opening towards the inner side (11) of the first sidewall (12) facing the tire cavity.

6. The tire in accordance with at least one of the previous claims wherein an air tube (43) is positioned within the sidewall groove (42) in contacting engagement with the groove sidewalls, the air tube (43) having an axial air passageway resiliently transfiguring segment by segment between an expanded sectional configuration and an at least a partially collapsed sectional configuration responsive to respective segment by segment engagement by the groove sidewalls against the air tube (43) within the rolling tire footprint.

7. The tire in accordance with at least one of the previous claims wherein a projecting ridge is provided comprising an annular rib integrally formed with the first sidewall (12) and extending along a circumference of a sidewall groove rim; and/or wherein a plurality of projecting ridges are spaced apart along an air tube passageway at a predetermined spacing frequency, the spacing frequency of the plurality of projecting ridges preferably either increasing or decreasing in a direction of air flow within the air passageway.

8. The tire in accordance with claim 7 wherein each of the plurality of ridges has a respective projecting amplitude into the air passageway.

9. The tire in accordance with claim 8 wherein the respective projecting amplitudes of at least two of the plurality of ridges are mutually differentiated.

10. The tire in accordance with claim 7, 8 or 9 wherein the plurality of ridges increase in respective projecting amplitude in the direction of air flow within the air tube (43) and/or wherein the spacing frequency of the projecting ridges either increases or decreases in a direction of air flow within the air passageway.

11. The tire in accordance with at least one of the previous claims wherein an outlet device is positioned along the air tube (43) for directing air from the air tube (43) toward the tire cavity and the direction of air flow in an operative cycle is toward the outlet device.

12. The tire in accordance with at least one of the previous claims wherein the air tube (43) comprises an annular body extending substantially a circumference of the tire first sidewall and the sidewall groove (42) is annular and located within a lower region of the first tire sidewall (12).

13. The tire in accordance with at least one of the previous claims wherein substantially an entirety of the air tube (43) resides within the sidewall groove (42).

14. The tire in accordance with at least one of the previous claims wherein the tire comprises a cover strip (45) separating and/or sealing the sidewall groove (42) or the sidewall groove (42) and the air tube (43) located in the sidewall groove (42) against the tire cavity.

15. The tire in accordance with at least one of the previous claims wherein the groove width along the second axis and between respective groove sidewalls is in a range of from 1.7 mm to 2.3 mm.
